(19) Europäisches Patentamt
European Patent Office
Office européen des brevets

(11) EP 0 626 563 B1

(12) **EUROPÄISCHE PATENTSCHRIFT**

(45) Veröffentlichungstag und Bekanntmachung des Hinweises auf die Patenterteilung:
**08.07.1998   Patentblatt 1998/28**

(51) Int Cl.$^6$: **G01D 5/34**, G01D 5/38

(21) Anmeldenummer: **94106452.9**

(22) Anmeldetag: **26.04.1994**

(54) **Positionsmesseinrichtung mit Hologramm-Masstab**

Position measuring device with hologram scale

Dispositif de mesure de positions avec l'échelle hologramme

(84) Benannte Vertragsstaaten:
**CH DE FR GB IT LI**

(30) Priorität: **21.05.1993   DE 4317064**

(43) Veröffentlichungstag der Anmeldung:
**30.11.1994   Patentblatt 1994/48**

(73) Patentinhaber: **ROBERT BOSCH GMBH**
**70442 Stuttgart (DE)**

(72) Erfinder:
- **Drabarek, Pawel Ing.**
  **D-71254 Ditzingen (DE)**
- **Schilling, Ulrich, Dipl.-Phys.**
  **D-70567 Stuttgart (DE)**

(56) Entgegenhaltungen:
FR-A- 2 615 280          GB-A- 2 138 588
US-A- 4 395 124

**Beschreibung**

Die Erfindung geht aus von einer Positionsmeßvorrichtung nach der Gattung der unabhängigen Ansprüche. Aus der DE-A-39 30 554 ist eine Vorrichtung zur absoluten zweidimensionalen Positionsmessung eines Teils in Bezug auf eine optische Meßanordnung bekannt, bei der die Oberfläche des Teils als Hologramm-Maßstab ausgebildet ist. Die im Hologramm-Maßstab enthaltene Information wird mit einer optischen Meßwelle, die auf den Hologramm-Maßstab gerichtet und dort gebeugt wird, durch Interferenz mit einer Referenzwelle ausgelesen. Die interferierten Wellen werden von einer optischen Meßanordnung aufgenommen, die mindestens zwei Sensoren enthält. In einem Ausführungsbeispiel der bekannten Vorrichtung wird die absolute Position aus den Phasenbeziehungen zwischen den von den Sensoren abgegebenen Signalen ermittelt. Die in den Figuren des genannten Dokuments wiedergegebene Struktur des Hologramms ist mit Linien angedeutet. Die genaue Struktur des Hologramms ist theoretisch berechenbar und kann in der Praxis erheblich komplizierter aussehen als es mit den Linien in vereinfachter Form skizziert ist. Eine Reduzierung des Aufwands bei den Berechnungen kann erreicht werden, wenn für jede der beiden zu bestimmenden Richtungen getrennte Strukturen vorgebbar sind.

Aus der US-A 4 395 124 ist ein Interferometer bekannt, das ein Gitter enthält, welches mit dem Teil, dessen Position zu ermitteln ist, mechanisch verbunden ist. Das holografisch aufgezeichnete Gitter ist als ein "single-frequency phase grating" ausgebildet. Gemäß einem Ausführungsbeispiel ist vorgesehen, daß bei der Herstellung des Gitters eine Belichtung der fotografischen Platte in zwei Schritten erfolgt, wobei eine Drehung um 90° zwischen den beiden Schritten vorgesehen ist. Eine andere vorbekannte Weiterbildung sieht vor, daß zwei Strahlungsquellen vorgesehen sind, die das Gitter an unterschiedlichen Stellen beleuchten.

Der Erfindung liegt die Aufgabe zugrunde, eine Positionsmeßvorrichtung mit einem Hologramm-Maßstab anzugeben, die einen großen absoluten Meßbereich sowie eine hohe Positionsauflösung ermöglicht.

Die Aufgabe wird durch die in den unabhängigen Ansprüchen enthaltenen Merkmale jeweils gelöst.

Vorteile der Erfindung

Eine erste Ausführung der erfindungsgemäßen Positionsmeßvorrichtung sieht vor, daß der Hologramm-Maßstab eine erste und wenigstens eine zweite Spur aufweist, wobei die Spuren jeweils als optische Gitter ausgebildet sind. Die Gitter weisen jeweils eine regelmäßige Struktur auf, die durch die Gitterkonstante charakterisiert ist. Die Gitterkonstanten der einzelnen Gitter unterscheiden sich jeweils um einen vorgegebenen Betrag.

Die Information über die Position des Teils in bezug auf die optische Meßanordnung steckt in der am Hologramm-Maßstab gebeugten Wellenfront, welche die optische Meßanordnung erreicht. An unterschiedlichen Orten in der Wellenfront treten gleichzeitig unterschiedliche Phasenlagen auf. An unterschiedlichen Positionen des Hologramm-Maßstabs gebeugte Wellenfronten unterscheiden sich eindeutig voneinander, so daß eine absolute Positionszuordnung möglich ist. Die optische Meßanordnung enthält Sensoren, die den unterschiedlichen Orten der Wellenfront zugeordnet sind. Die von den einzelnen Sensoren abgegebenen elektrischen Signale weisen entweder unterschiedliche Phasenlagen auf, oder geben jeweils Signalpegel ab, die beispielsweise im Rahmen eines Phasenschiebeverfahrens auf Phasenlagen zurückgerechnet werden können. Aus den einzelnen Phasenlagen der von den Sensoren der optischen Meßanordnung abgegebenen Signale sowie gegebenenfalls aus Phasendifferenzmessungen ist die Ermittlung einer Position möglich.

Der Meßfehler der Positionsmeßvorrichtung ist im wesentlichen festgelegt durch die Genauigkeit der Phasenmessungen in bezug auf die Spur mit der kleinsten Gitterkonstanten sowie gegebenenfalls durch die Genauigkeit bei Ermittlung der Phasendifferenzen. Eine Erhöhung der Spurenanzahl über zwei Spuren hinaus ermöglicht eine einfache Erweiterung des absoluten Meßbereichs, ohne daß die Genauigkeit der Phasenmessungen oder gegebenenfalls die der Phasendifferenzmessungen erhöht werden müßte. Der Vorteil der ersten Ausführung der erfindungsgemäßen Positionsmeßvorrichtung liegt darin, daß eine einfache Gitterstruktur verwendbar ist, die durch jeweils die Gitterkonstante charakterisiert ist.

Eine zweite Ausführung der erfindungsgemäßen Positionsmeßvorrichtung sieht vor, daß der Hologramm-Maßstab wieder eine erste und wenigstens eine zweite Spur aufweist und daß die Spuren wieder als optische Gitter ausgebildet sind. Der Unterschied zur ersten Ausführung liegt darin, daß die Gitterkonstanten der einzelnen Gitter jeweils identisch sind und daß das Gitter in der zweiten Spur und die in den gegebenenfalls vorhandenen weiteren Spuren Felder aufweisen, bei denen die Anfangsphase jeweils auf einen vorgegebenen Wert festgelegt ist. Dies wird erreicht, indem das Gitter im betreffenden Feld um einen Bruchteil einer Gitterkonstanten verschoben wird. Das Gitter der ersten Spur ist als Referenzgitter vorgesehen. Eine Positionsänderung um eine Gitterkonstante ändert die Phase des Ausgangssignals des für diese Spur vorgesehenen wenigstens einen Sensors in der optischen Meßanordnung um 360°.

Die Gitter der zweiten und gegebenenfalls weiteren Spuren mit den Feldern ermöglichen den Aufbau einer einfachen digitalen Codierung. Bei einer Verschiebung des Hologramm-Maßstabs ergeben sich zusätzlich zum bereits für die erste Spur beschriebenen Phasenverlauf an den Übergangsstellen zwischen den einzelnen Feldern mit geänderter Anfangsphase Sprungstellen in der Wellenfront. Die an den Gittern mit den Feldern gebeugte Strahlung weist somit bezüglich der am ersten Gitter gebeugten Strahlung eine Phasenverschiebung auf, die der Anfangsphase des Gitters des betreffenden Feldes entspricht.

Die Positionsauflösung der zweiten Ausführung der erfindungsgemäßen Positionsmeßvorrichtung ist durch die Länge der einzelnen Felder begrenzt. Der wesentliche Vorteil liegt darin, daß an die Genauigkeit der Phasenmessung keine hohen Anforderungen zu stellen sind. Werden beispielsweise die Werte 0° und beispielsweise 180° für die Anfangsphase der einzelnen Felder gewählt (Verschiebung des Gitters im Feld um eine halbe Gitterperiode), so muß die Phase lediglich auf +/- 90° bestimmbar sein.

Gemeinsame Vorteile der Ausführungen der erfindungsgemäßen Positionsmeßvorrichtung sind das Erreichen einer sehr hohen Positionsauflösung bei gleichzeitig großem Meßbereich mit relativ geringem Aufwand. Der Hologramm-Maßstab gestattet die Unterbringung einer großen Informationsdichte, die von der einfach ausgestalteten optischen Meßanordnung zur Bestimmung der absoluten Position erfaßbar ist.

Vorteilhafte Weiterbildungen und Ausgestaltungen der erfindungsgemäßen Positionsmeßvorrichtung ergeben sich aus abhängigen Ansprüchen.

Besonders vorteilhaft ist die Kombination von wenigstens zwei Spuren mit Gittern, deren Gitterkonstante sich um einen vorgegebenen Betrag unterscheidet, mit wenigstens einem Gitter, das Felder mit wechselnder Anfangsphase aufweist.

Der wesentliche Vorteil dieser Ausgestaltung liegt darin, daß der absolute Meßbereich erheblich erweiterbar ist und gleichzeitig die Positionsauflösung erhalten bleibt. Eine Positionsmessung im Meter-Bereich ist mit einer Genauigkeit von wenigen Nanometer durchführbar.

Weitere Ausgestaltungen betreffen die optischen Komponenten der erfindungsgemäßen Positionsmeßvorrichtung. Die optische Meßanordnung ist vorteilhafterweise als Photodiodenzeile oder vorzugsweise als Photodiodenarray ausgebildet. Mit dieser Maßnahme ist eine preisgünstige Realisierung der optischen Meßanordnung bei geringstem Verdrahtungsaufwand realisierbar.

Die erfindungsgemäße Positionsmeßvorrichtung ist gleichermaßen geeignet zur Messung einer linearen, gegebenenfalls zweidimensionalen Verschiebung oder einer Drehung von jeweils einem Teil gegenüber einem anderen Teil, wobei stets ohne weitere Meßnahmen die absolute Position angegeben werden kann.

Zeichnung

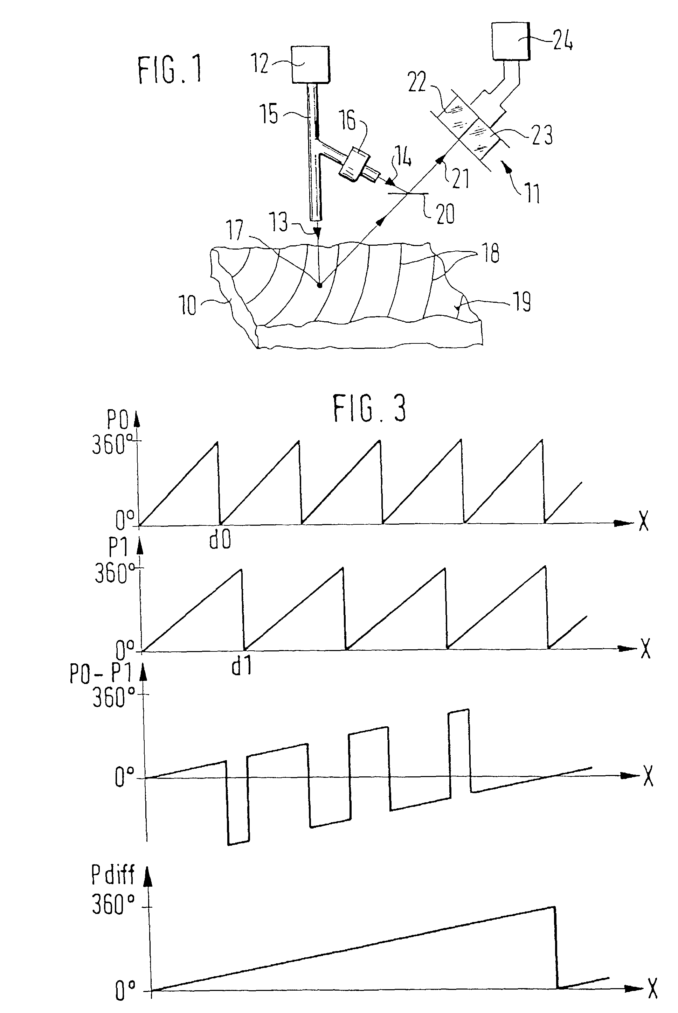

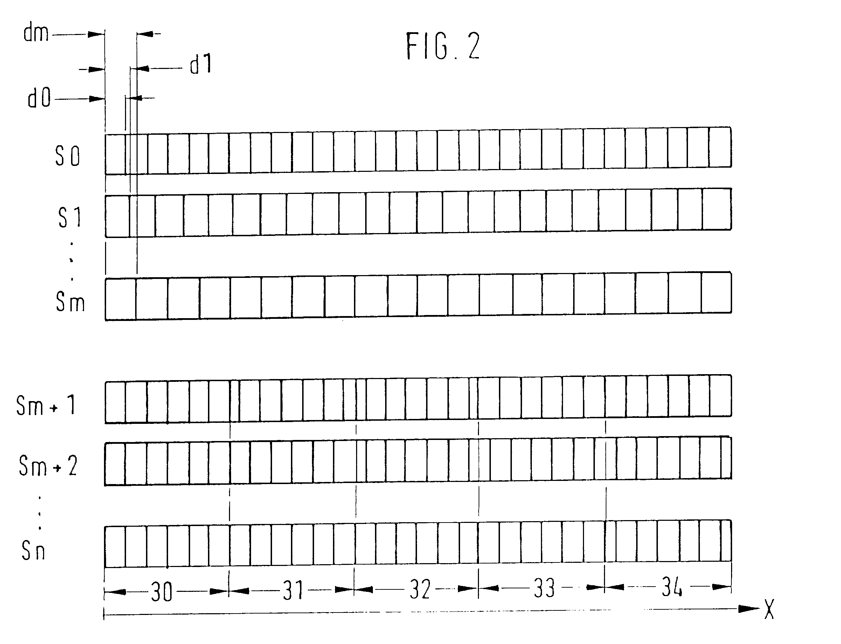

Figur 1 zeigt eine Ausgestaltung einer erfindungsgemäßen Vorrichtung zur absoluten Positionsmessung, Figur 2 zeigt eine Ausgestaltung eines Hologramm-Maßstabs und Figur 3 zeigt Phasenverläufe in Abhängigkeit von einer Position.

Figur 1 zeigt ein Teil 10, dessen absolute Position in bezug auf eine optische Meßanordnung 11 zu bestimmen ist. Die Positionsmeßvorrichtung enthält eine Strahlungsquelle 12, aus deren Strahlung eine Meßwelle 13 und eine Referenzwelle 14 abgeleitet sind. Sowohl die Meß- als auch die Referenzwelle 13, 14 sind zumindest teilweise in einem Strahlungswellenleiter 15 geführt. Im Strahlengang der Referenzwelle 14 ist ein Modulator 16 (Phasen- oder Frequenzmodulator) angeordnet. Die Meßwelle 13 ist auf einen Auftreffort 17 auf der mit einem Hologramm-Maßstab 18 versehenen Oberfläche 19 des Teils 10 gerichtet. Die am Auftreffort gebeugte Meßwelle 13 wird mit der Referenzwelle 14 an einem Strahlteiler 20 zur Interferenz gebracht. Vom Strahlteiler 20 geht eine Empfangswelle 21 aus, welche die optische Meßanordnung 11 empfängt. Die optische Meßanordnung 11 enthält wenigstens zwei Sensoren 22, 23, deren Ausgangssignale einer signalverarbeitenden Anordnung 24 zugeführt sind.

Aufbaubeispiele der Positionsmeßvorrichtung sind im Detail in der eingangs erwähnten DE-OS 39 30 554 beschrieben.

Die erfindungsgemäße Positionsvorrichtung gemäß Figur 1 arbeitet folgendermaßen:

Die Information über die absolute Position des Teils 10 in bezug auf die optische Meßanordnung 11 ist auf der Oberfläche 19 des Teils 10 enthalten, die als Hologramm-Maßstab 18 ausgebildet ist. Der Hologramm-Maßstab 18 ist auch separat herstellbar und anschließend mit der Oberfläche 19 des Teils 10 verbindbar. Die Struktur des Hologramm-Maßstabs 18 ist theoretisch berechenbar. Eine besonders vorteilhafte Struktur wird weiter unten anhand von Figur 2 näher beschrieben. Die im Hologramm-Maßstab 18 enthaltene Information wird auf optischem Wege ausgelesen. Die Information ist in der Wellenfront der an der Oberfläche 19 gebeugten Strahlung enthalten. An unterschiedlichen Orten der Wellenfront der gebeugten Strahlung tritt eine unterschiedliche Phasenlage auf. Die an unterschiedlichen Positionen des Hologramm-Maßstabs 18 gebeugten Wellenfronten unterscheiden sich eindeutig voneinander, so daß eine absolute Positionszuordnung möglich ist.

Die Phasenlagen in der Wellenfront der gebeugten Strahlung werden technisch auswertbar durch Interferenz mit der Referenzwelle 14. Die beispielsweise an einem Strahlteiler 20 zur Interferenz gebrachten Wellen 13, 14 gelangen als Empfangswelle 21 auf die optische Meßanordnung 11. Die optische Meßanordnung 11 enthält wenigstens die beiden Sensoren 22, 23, die der Wellenfront der Empfangswelle 21 ausgesetzt sind. Da an unterschiedlichen Orten der Wellenfront der Empfangswelle 21 unterschiedliche Phasen vorliegen, empfangen die Sensoren 22, 23 Signale mit entsprechend unterschiedlichen Phasenlagen.

Zur Ermittlung der Phasenlage sind bekannte Verfahren einsetzbar, bei denen die Eigenschaften der Strahlung in mindestens einem Interferometerarm verändert werden. Zunächst kann beispielsweise das Phasenschiebeverfahren eingesetzt werden, bei dem die Phase der Strahlung über die Zeit verändert wird.

Bei dem Phasenschiebeverfahren ist der Modulator 16 beispielsweise als piezoelektrisches Bauteil ausgebildet, das eine einfache Änderung der optischen Weglänge um Strecken ermöglicht, die im Wellenlängenbereich der verwendeten Strahlung liegen.

Eine andere Möglichkeit bietet das Fouriertransformationsverfahren, bei dem der Modulator 16 die Referenzwelle 14 leicht verkippen muß.

Eine andere vorteilhafte Möglichkeit, die Phasenlage der von den Sensoren 22, 23 abgegebenen Signale zu ermitteln, bietet die Heterodyn-Technik.

Diese Verfahren sind aus der Fachliteratur bekannt. Eine Übersicht enthält der Artikel von Th. Kreis und W. Osten, "Automatische Rekonstruktion von Phasenverteilungen aus Interferogrammen" in der Zeitschrift "Technisches Messen" 58, 1991, R. Oldenbourg Verlag, S. 235 bis 246.

Eine erste Möglichkeit bei der Heterodyntechnik sieht vor, daß der Modulator als Frequenzmodulator ausgebildet ist, der die Frequenz der Referenzstrahlung 14 verändert. Die Sensoren 22, 23 geben ein Signal ab, das eine Frequenz aufweist, die der Differenzfrequenz zwischen Referenzstrahlung 14 und der Meßstrahlung 13 aufweist, wobei die Information weiterhin in der Phasenlage enthalten ist. Der Modulator 16 ist beispielsweise ein akkustooptischer Modulator.

Eine andere vorteilhafte Möglichkeit zum Bereitstellen einer Differenzfrequenz sieht den Einsatz einer in der Frequenz modulierbaren Strahlungsquelle 12 vor, beispielsweise einen Halbleiterlaser, wobei der Modulator 16 eine Laufzeitdifferenz zwischen den beiden Strahlungen 13, 14 verursacht, die zu einer stets vorhandenen Differenzfrequenz führt. Die Modulationsfrequenz kann auf einen Wert festgelegt werden, der in der signalverarbeitenden Anordnung 24 einfach handhabbar ist. Derzeit übliche Werte liegen im Bereich von 1 MHz bis 100 MHz. In dieser Ausgestaltung arbeitet die erfindungsgemäße Positionsmeßvorrichtung dann als Heterodyn-Interferometer. Die signalverarbeitende Anordnung 24 kann bei einem derartigen Heterodyn-Interferometer als Bezugsphase entweder das von einem Sensor 22, 23 abgegebene Signal oder das von einem Modulationsfrequenzgenerator bereitgestellte Modulationssignal als Referenzphase verwenden.

Die in der signalverarbeitenden Anordnung 24 vorgenommene Auswertung von Phasenbeziehungen ermöglicht die Angabe einer absoluten Position des Teils 10 in bezug auf die optische Meßanordnung 11. Die signalverarbeitende Anordnung 24 kann sowohl die absolute Phasenlage der einzelnen Signale als auch die Phasendifferenz zwischen den von den beiden Sensoren 22, 23 abgegebenen Signalen unmittelbar bestimmen. Durch Vergleich der Phasenlagen und gegebenenfalls berechneter Werte mit Werten, die in einem Speicher der signalverarbeitenden Anordnung 24 hinterlegt sind, ist das Ergebnis der Positionsmessung erhältlich. Die Position läßt sich zweidimensional bestimmen, wobei eine eindimensionale Positionsmessung als trivialer Fall in der zweidimensionalen Messung enthalten ist. Ein Beispiel einer Auswertung von Phasenbeziehungen wird nach der Erläuterung des in Figur 2 gezeigten Hologramm-Maßstabs 18 anhand von den in Figur 3 gezeigten Phasenverläufen beschrieben.

Figur 2 zeigt eine vorteilhafte Ausgestaltung des Hologramm-Maßstabs 18. Der Hologramm-Maßstab 18 enthält eine erste Gruppe von Spuren $S_0$-$S_m$ und eine zweite Gruppe von Spuren $S_{m+1}$-$S_m$. Jede dieser Spuren $S_0$-$S_m$, $S_{m+1}$-$S_n$ ist als optisches Gitter ausgebildet. Die Gitter der Spuren $S_0$-$S_m$ sind jeweils vollständig durch die Angabe der Gitterkonstanten $d_0$-$d_m$ charakterisiert. Wesentlich ist, daß sich die Gitterkonstanten $d_0$-$d_m$ um einen vorgegebenen Betrag jeweils unterscheiden. Die Festlegung kann beispielsweise folgendermaßen erfolgen:

$$d_{i+1} = d_i (1 + S) \quad S > 0$$

Die Spuren $S_0$-$S_m$ sind gewissermaßen als analoge Spuren zu bezeichnen, weil zwischen der Phase der von einer einzelnen Spur $S_o$ - $S_m$ gebeugten Strahlung und der Position x ein linearer, analoger Zusammenhang (modulo 360°) besteht. Bei entsprechend genauer Phasenmessung ist somit eine hohe Positionsauflösung möglich, die bestimmt ist durch die Phase der von der Spur $S_0$ mit der kleinsten Gitterkonstanten $d_0$ gebeugten Strahlung. Weiterhin ermöglicht die erfindungsgemäße Positionsmeßvorrichtung einen großen absoluten Meßbereich, der durch die Phasendifferenz der von den einzelnen Spuren $S_0$-$S_m$ gebeugten Strahlungen festgelegt werden kann.

Gegenüber den analogen Spuren $S_0$-$S_m$ sind die Spuren $S_{m+1}$-$S_n$ als digitale Spuren zu bezeichnen. Vorzusehen ist wenigstens eine digitale Spur $S_{m+1}$-$S_n$ in Verbindung mit einer analogen Spur $S_0$. Das Gitter der analogen Spur $S_0$ weist die gleiche Gitterkonstante $d_0$ wie das Gitter der wenigstens einen digitalen Spur $S_{m+1}$-$S_n$ auf. Die analoge Spur $S_0$ dient als Referenz.

Die digitalen Spuren $S_{m+1}$-$S_n$ sind Gitter mit jeweils identischer Gitterkonstanten, beispielsweise $d_0$, die sich aber in der Anfangsphase innerhalb einzelner Felder 30 - 34 unterscheiden. Sofern nur eine digitale Spur $S_{m+1}$ - $S_n$ vorhanden ist, wechselt die Phasenlage jeweils bei aufeinanderfolgenden Feldern 30, 31; 31, 32; 32, 33; 33, 34. Sofern mehr als eine Spur $S_{m+1}$-$S_n$ vorgesehen ist, wechselt beim Übergang von einem zum anderen Feld wenigstens bei einer Spur $S_{m+1}$ - $S_n$ die Anfangsphase. Innerhalb der Felder 30 - 34 ist keine Änderung der Gitterstruktur vorgesehen. Bei dem in Figur 2 gezeigten Ausführungsbeispiel weist die Spur $S_{m+1}$ in den Feldern 30, 33, 34 die Anfangsphase 0° und in den Feldern 31, 32 die Anfangsphase 180 ° auf. Die Phase der an den

Gittern der Spuren $S_{m+1}$ bis $S_n$ gebeugten Strahlung ist im Ausführungsbeispiel somit bis auf die Anfangsphase der einzelnen Felder 30 - 34 identisch mit der Phase der an der analogen Spur $S_0$ gebeugten Strahlung. Bei einer Verschiebung des Hologramm-Maßstabs 18 ergeben sich an den Übergangsstellen zwischen den einzelnen Feldern 30 - 34 Sprungstellen in den Phasenlagen. Die an den digitalen Spuren $S_{m+1}$-$S_n$ gebeugte Strahlung weist somit bezüglich der an der analogen Spur $S_0$ gebeugten Strahlung eine Phasenverschiebung auf, die der Anfangsphase des Gitters des betreffenden Feldes 30 - 34 entspricht.

Die Werte der Anfangsphase der einzelnen Felder 30 - 34 lassen sich digital codieren, beispielsweise dadurch, daß 0° und 180° (1 Bit/Spur) oder 0°, 90°, 180° und 270° (2 Bit/Spur) als Anfangsphase verwendet werden.

Die erreichbare Positionsauflösung ist durch die Länge der einzelnen Felder 30 - 34 gegeben. Unter der Annahme, daß die Gitterkonstante der einen analogen Spur $S_0$ und der wenigstens einen digitalen Spur $S_{m+1}$-$S_n$ ein Mikrometer beträgt, liegt die Positionsauflösung bei mehreren Mikrometern, entsprechend der Anzahl der Gitterlinien innerhalb eines Feldes 30 - 34. Der wesentliche Vorteil liegt darin, daß an die Genauigkeit der Phasenmessung keine hohen Anforderungen zu stellen sind. Werden beispielsweise die Werte 0° und 180° für die Anfangsphase der einzelnen Felder 30 - 34 verwendet, so muß die Phasenlage lediglich auf +/- 90° bestimmbar sein.

Eine besonders vorteilhafte Weiterbildung sieht die Kombination von mehr als einer analogen Spur $S_0$-$S_m$ mit wenigstens einer digitalen Spur $S_{m+1}$-$S_n$ vor. Mit dieser Weiterbildung kann der mit den analogen Spuren $S_0$-$S_m$ erreichte absolute Meßbereich erweitert werden. Dabei darf die maximale Länge der Felder 30 - 34 der digitalen Spuren $S_{m+1}$-$S_n$ den mit den analogen Spuren $S_0$-$S_m$ erreichten Eindeutigkeitsbereich nicht überschreiten. Eine Überschreitung ist unter Verzicht auf die absolute Positionsmessung allerdings jederzeit möglich. Der Meßwert wird mehrdeutig, entsprechend wenigstens einer Phasenmessung oder Phasenänderung von mehr als 360°.

Die Anzahl der Sensoren 22, 23 in der optischen Meßanordnung 11 ist wenigstens gleich der Anzahl der Spuren $S_0$-$S_m$, $S_{m+1}$-$S_n$. Im praktischen Einsatz hat sich die Verwendung einer Photodiodenzeile bewährt, wobei vorzugsweise die Ausgangssignale mehrerer einzelner Sensoren zusammen betrachtet werden, so daß erheblich mehr Sensoren als Spuren vorgesehen sind. Die Auswertung von Signalen mehrerer Sensoren, die einer Spur $S_0$-$S_m$, $S_{m+1}$-$S_n$ zugeordnet sind, ermöglicht eine Mittelwertbildung, die den Rauschsignaleinfluß reduziert. Eine weitere Erhöhung der Information bei der Auswertung ist mit einem Photodiodenarray möglich, das eine zweidimensionale Auswertung mit den von der optischen Meßanordnung 11 abgegebenen Signalen ermöglicht. Die Verwendung des Photodiodenarrays ist insbesondere dann sinnvoll, wenn die Phasenlage aus einer inversen Fouriertransformation mit Hilfe des Fouriertransformationsverfahrens ermittelt werden soll.

In Figur 3 sind vier Phasenverläufe P0; P1; P0-P1; $P_{diff}$ jeweils in Abhängigkeit vom Ort x gezeigt. P0 ist das Ausgangssignal eines Sensors 22, 23, der beispielsweise den Teil der Wellenfront empfängt, der von der Spur $S_0$ mit der Gitterkonstanten $d_0$ gebeugt wird. P1 gibt den Phasenverlauf des Signals wieder, das von dem Sensor 22, 23 abgegeben wird, der den Teil der Wellenfront empfängt, der von der Spur $S_1$ gebeugt wird. Bei einer Verschiebung des Hologramm-Maßstabs 18 um den Betrag der Gitterkonstanten $d_0$ ändert sich die Phase des Signals P0 von 0° bis 360°. Bei einer weiteren Verschiebung wiederholen sich die Werte periodisch.

In entsprechender Weise ergibt sich der Phasenverlauf P1, wobei ein Gitter zugrundegelegt ist, das eine von $d_0$ abweichende Gitterkonstante $d_1$ (im Beispiel $d_1$ > $d_0$) aufweist. Eine Phasenänderung vom Wert 0° auf 360° ergibt sich daher bei einer größeren Verschiebung des Hologramm-Maßstabs 18 im Vergleich zum Phasenverlauf P0.

Der im dritten Teilbild gezeigte Phasenverlauf P0-P1 entsteht durch eine Differenzbildung der Phasenverläufe P0 und P1. In der signalverarbeitenden Anordnung 24 kann vorgesehen sein, daß bei einem negativen Ergebnis bei der Differenzbildung stets der Betrag 360° zum Ergebnis zu addieren ist. Das Ergebnis ist im vierten Teilbild mit dem Phasenverlauf $P_{diff}$ gezeigt.

In der signalverarbeitenden Anordnung 24 kann zunächst aus dem Phasenverlauf $P_{diff}$ die Position bestimmt werden, die mit einer bestimmten Meßunsicherheit behaftet ist. Nach der Bestimmung der zumindest groben Position kann die signalverarbeitende Anordnung 24 entweder den Phasenverlauf P0 oder den Phasenverlauf P1 zur weiteren hochgenauen Positionsermittlung heranziehen. In einer anderen Ausgestaltung ist eine Positionsbestimmung auch ohne die Heranziehung des Phasenverlaufs $P_{diff}$ möglich durch Vergleich der einzelnen Phasenverläufe P0 und P1 mit in einem Speicher abgelegten Vergleichswerten.

Die in Figur 3 gezeigten Phasenverläufe P0 und P1 werden von analogen Spuren $S_0$-$S_m$ erhalten. Die Phasenverläufe, die mit den digitalen Spuren $S_{m+1}$-$S_n$ erhalten werden, entsprechen den in Figur 3 gezeigten Phasenverläufen P0 und P1 bis auf die Anfangswerte der Phasen, die bei den Übergängen zwischen den einzelnen Feldern 30 - 34 in der beschriebenen Weise geändert werden können. Der Phasenverlauf fängt beispielsweise bei 0° an und endet bei einer Verschiebung um die Gitterkonstante $d_0$ bei 360°. Wird die Anfangsphase des nachfolgenden Feldes auf beispielsweise 180° festgelegt, so springt die Phase beim Übergang auf dieses Feld nicht von 360° auf 0°, sondern von 360° auf lediglich 180° zurück.

Die erfindungsgemäße Vorrichtung gemäß Figur 1 kann weitgehend in integrierter Optik hergestellt sein.

Insbesondere sind hierbei die Strahlungen in Lichtleitern geführt. Ein Vorteil bei der Verwendung von Lichtleitern liegt darin, daß die optische Meßanordnung 11 abgesetzt von den übrigen Bauteilen sein kann. Die Maßnahme reduziert die thermische Belastung der Sensoren 22, 23.

**Patentansprüche**

1. Vorrichtung zur absoluten Positionsmessung eines Teils in bezug auf eine optische Meßanordnung, die wenigstens zwei Sensoren enthält, die Signale abgeben, deren Phasenlage zueinander von einem mit dem Teil verbundenen Hologramm-Maßstab beeinflußt ist, dadurch gekennzeichnet, daß der Hologramm-Maßstab (18) mehrere Spuren ($S_0$-$S_m$) aufweist, daß die Spuren ($S_0$-$S_m$) als optische Gitter ausgebildet sind und daß sich die Gitterkonstanten ($d_0$-$d_m$) jeweils um einen vorgegebenen Betrag unterscheiden.

2. Vorrichtung zur absoluten Positionsmessung eines Teils in bezug auf eine optische Meßanordnung, die wenigstens zwei Sensoren enthält, die Signale abgeben, deren Phasenlage zueinander von einem mit dem Teil verbundenen Hologramm-Maßstab beeinflußt ist, dadurch gekennzeichnet, daß der Hologramm-Maßstab (18) eine erste Spur ($S_0$) aufweist, die als optisches Gitter mit einer gegebenen Gitterkonstanten ($d_0$) ausgebildet ist, daß der Hologramm-Maßstab (18) wenigstens eine weitere Spur ($S_{m+1}$-$S_n$) aufweist, die ebenfalls als optisches Gitter mit der Gitterkonstanten ($d_0$) ausgebildet ist, daß das Gitter der wenigstens einen weiteren Spur ($S_{m+1}$-$S_n$) Felder (30 - 34) aufweist, in denen jeweils die Anfangsphase auf einen vorgegebenen Wert festgelegt ist.

3. Vorrichtung nach Anspruch 1, dadurch gekennzeichnet, daß der Hologramm-Maßstab (18) wenigstens eine weitere Spur ($S_{m+1}$-$S_n$) aufweist, daß die wenigstens eine weitere Spur ($S_{m+1}$ -$S_n$) als optisches Gitter mit der Gitterkonstanten ($d_0$) ausgebildet ist, daß das Gitter der wenigstens einen weiteren Spur ($S_{m+1}$ -$S_n$) Felder (30 - 34) aufweist und daß die Anfangsphase in den einzelnen Feldern (30 - 34) jeweils auf einen vorgegebenen Wert festgelegt ist.

4. Vorrichtung nach Anspruch 2 oder 3, dadurch gekennzeichnet, daß bei mehreren Spuren ($S_{m+1}$-$S_n$) mit Gittern, die jeweils Felder (30 - 34) aufweisen, die Anfangsphase nur in einer Spur ($S_{m+1}$-$S_n$) bei sich entsprechenden Feldern (30 - 34) in den einzelnen Spuren ($S_{m+1}$-$S_n$) geändert ist.

5. Vorrichtung nach Anspruch 2 oder 3, dadurch gekennzeichnet, daß die Anfangsphase jeweils um 180° geändert ist.

6. Vorrichtung nach Anspruch 1 oder 2, dadurch gekennzeichnet, daß die Sensoren (22, 23) der optischen Meßanordnung (11) als Photodiodenzeile ausgebildet sind.

7. Vorrichtung nach Anspruch 1 oder 2, dadurch gekennzeichnet, daß die Sensoren (22, 23) der optischen Meßanordnung (11) als Photodiodenarray ausgebildet sind.

8. Vorrichtung nach Anspruch 1 oder 2, dadurch gekennzeichnet, daß als Strahlungsquelle ein Halbleiterlaser (12) vorhanden ist.

9. Vorrichtung nach Anspruch 1 oder 2, dadurch gekennzeichnet, daß eine Referenzwelle (14) vorgesehen ist, die mit einer Meßwelle (13) interferiert wird, und daß ein Modulator (16) zur Modulation der Referenzwelle (14) vorhanden ist.

10. Vorrichtung nach Anspruch 1 oder 2, dadurch gekennzeichnet, daß die Vorrichtung in integrierter Optik realisiert ist.

11. Vorrichtung nach Anspruch 10, dadurch gekennzeichnet, daß eine Empfangswelle (21), die der optischen Meßanordnung (11) zugeführt ist, in einer Lichtleiteranordnung geführt ist.

**Claims**

1. Device for the absolute position measurement of a part with reference to an optical measuring arrangement which contains at least two sensors which output signals whose mutual phase relation is influenced by a hologram scale connected to the part, characterized in that the hologram scale (18) has a plurality of tracks ($S_0$-$S_m$), in that the tracks ($S_0$-$S_m$) are constructed as optical gratings, and in that the grating constants ($d_0$-$d_m$) differ in each case by a prescribed amount.

2. Device for the absolute position measurement of a part with reference to an optical measuring arrangement which contains at least two sensors which output signals whose mutual phase relation is influenced by a hologram scale connected to the part, characterized in that the hologram scale (18) has a first track ($S_0$) which is constructed as an optical grating having a given grating constant ($d_0$), in that the hologram scale (18) has at least one further track ($S_{m+1}$-$S_n$) which is likewise constructed as an optical grating having the grating constant ($d_0$), and in that the grating of the at least one further track

$(S_{m+1}-S_n)$ has fields (30-34) in which in each case the initial phase is fixed at a prescribed value.

3. Device according to Claim 1, characterized in that the hologram scale (18) has at least one further track $(S_{m+1}-S_n)$, in that the at least one further track $(S_{m+1}-S_n)$ is constructed as an optical grating having the grating constant $(d_0)$, in that the grating of the at least one further track $(S_{m+1}-S_n)$ has fields (30-34) and in that the initial phase is fixed in the individual fields (30-34) at a prescribed value in each case.

4. Device according to Claim 2 or 3, characterized in that in the case of a plurality of tracks $(S_{m+1}-S_n)$ having gratings which in each case have fields (30-34), the initial phase is changed in only one track $(S_{m+1}-S_n)$ in the case of mutually corresponding fields (30-34) in the individual tracks $(S_{m+1}-S_n)$.

5. Device according to Claim 2 or 3, characterized in that the initial phase is changed by 180° in each case.

6. Device according to Claim 1 or 2, characterized in that the sensors (22, 23) of the optical measuring arrangement (11) are constructed as a photodiode row.

7. Device according to Claim 1 or 2, characterized in that the sensors (22, 23) of the optical measuring arrangement (11) are constructed as a photodiode array.

8. Device according to Claim 1 or 2, characterized in that a semiconductor laser (12) is present as radiating source.

9. Device according to Claim 1 or 2, characterized in that a reference wave (14) is provided with which a measuring wave (13) interferes and in that a modulator (16) is present for modulating the reference wave (14).

10. Device according to Claim 1 or 2, characterized in that the device is realized using integrated optics.

11. Device according to Claim 10, characterized in that a receiving wave (21) which is fed to the optical measuring arrangement (11) is guided in an optical conductor arrangement.

**Revendications**

1. Dispositif de mesure de position absolue d'une pièce par rapport à un dispositif de mesure optique, comportant au moins deux capteurs fournissant des signaux dont la phase respective est influencée par une échelle de mesure d'hologramme associée à la pièce,
caractérisé en ce que

- l'échelle de mesure d'hologramme (18) comporte plusieurs traces $(S_o-S_m)$
- les traces $(S_o-S_m)$ sont réalisées sous forme de réseau optique, et
- les constantes de réseau $(d_o-d_m)$ diffèrent chaque fois d'une valeur prédéterminée.

2. Dispositif de mesure de position absolue d'une pièce par rapport à un dispositif de mesure optique, comportant au moins deux capteurs fournissant des signaux dont la phase respective est influencée par une échelle de mesure d'hologramme associée à la pièce,
caractérisé en ce que

- l'échelle de mesure d'hologramme (18) comporte une première trace $(S_o)$ en forme de réseau optique ayant une constante de réseau $(d_o)$ donnée,
- l'échelle de mesure d'hologramme (18) comporte au moins une autre trace $(S_{m+1}-S_m)$ également réalisée comme un réseau optique ayant une constante de réseau $(d_o)$, et
- le réseau d'au moins une autre trace $(S_{m+1}-S_n)$ comporte 'des champs (30-34) dans lesquels la phase initiale est chaque fois fixée à une valeur donnée.

3. Dispositif selon la revendication 1,
caractérisé en ce que

- l'échelle de mesure d'hologramme (18) comporte au moins une autre trace $(S_{m+1}-S_n)$,
- cette au moins autre trace $(S_{m+1}-S_n)$ est réalisée comme un réseau optique ayant une constante de réseau $(d_o)$,
- le réseau de cette trace $(S_{m+1}-S_n)$ comporte des champs (30-34), et
- la phase-initiale des différents champs (30-34) est fixée respectivement à une valeur prédéterminée.

4. Dispositif selon la revendication 2 ou 3,
caractérisé en ce que
pour plusieurs traces $(S_{m+1}-S_n.)$ avec des réseaux ayant des champs (30-34), la phase initiale de seulement une trace $(S_{m+1}-S_n)$ pour les champs correspondants (30-34) est modifiée dans les différentes traces $(S_{m+}-S_n.)$.

5. Dispositif selon les revendications 2 ou 3,
caractérisé en ce que
la phase initiale est modifiée chaque fois de 180°.

**6.** Dispositif selon l'une quelconque des revendications 1 et 2,
caractérisé en ce que
les capteurs (22, 23) du dispositif de mesure optique (11) sont réalisés sous la forme de lignes de photodiodes.

**7.** Dispositif selon les revendications 1 ou 2,
caractérisé en ce que
les capteurs (22, 23) du dispositif de mesure optique (11) sont réalisés sous la forme d'un réseau de photodiodes.

**8.** Dispositif selon les revendications 1 ou 2,
caractérisé en ce que
la source de rayonnement est un laser à semi-conducteur (12).

**9.** Dispositif selon l'une des revendications 1 ou 2,
caractérisé par
une onde de référence (14) qui interfère avec une onde de mesure (13), et un modulateur (16) module l'onde de référence (14).

**10.** Dispositif selon la revendication 1 ou 2,
caractérisé en ce qu'
il est réalisé en optique intégrée.

**11.** Dispositif selon la revendication 10,
caractérisé en ce qu'
une onde de réception (21) appliquée au dispositif de mesure optique (11) est conduite dans un dispositif à guide de lumière.

FIG.1

FIG. 3

FIG. 2